# NEUE EUROPÄISCHE PATENTSCHRIFT

(11) **EP 3 102 931 B2**
(45) Veröffentlichungstag und Bekanntmachung des Hinweises auf die Entscheidung über den Einspruch: **18.05.2022**
(45) Hinweis auf die Patenterteilung: 06.11.2019
(21) Anmeldenummer: 14806563.4
(22) Anmeldetag: 20.11.2014
(51) Int. Cl.: G01N 29/07, B23P 15/00, F01L 3/20, G01B 17/02

(54) **VERFAHREN ZUR ULTRASCHALLMESSUNG EINER WANDSTÄRKE BEI HOHLVENTILEN**
METHOD FOR ULTRASONIC MEASUREMENT OF WALL THICKNESS OF HOLLOW VALVES
PROCÉDÉ DE MESURE ULTRASONORE DU ÉPAISSEUR D'UNE SOUPAPE CREUSE

(30) Priorität: 05.02.2014 DE 102014202021
(43) Veröffentlichungstag der Anmeldung: 14.12.2016
(73) Patentinhaber: Mahle International GmbH, 70376 Stuttgart (DE)
(72) Erfinder: KROOS, Peter, 71277 Rutesheim (DE); LUVEN, Christoph, 70376 Stuttgart (DE); SCHNELL, Holger, 71665 Vaihingen (DE); STRELOW, Thomas, 71397 Leutenbach (DE); WLASSA, Richard, 70469 Stuttgart (DE)
(74) Vertreter: BRP Renaud & Partner mbB Rechtsanwälte Patentanwälte Steuerberater
(86) Internationale Anmeldenummer: PCT/EP2014/075161
(87) Internationale Veröffentlichungsnummer: WO 2015/117689

(56) Entgegenhaltungen:
- WO-A1-03/100223
- DE-A1- 4 019 865
- DE-A1-102007 011 445
- DE-U1- 20 207 684
- GB-A- 1 011 486
- JP-A- 2012 136 979
- US-A- 2 274 667
- US-A- 2 403 260
- US-A- 3 233 599
- US-A- 3 382 707
- US-A- 4 152 380
- US-A- 4 706 967
- US-A- 4 798 181
- US-A- 4 834 036
- US-A- 5 549 004
- US-A- 5 655 493
- US-A- 5 769 037
- US-A1- 2005 076 875
- US-A1- 2008 272 325
- US-A1- 2016 053 641
- US-A1- 2016 348 546
- Pk Sharma ET AL: "NON-DESTRUCTIVE EVALUATION OF CLOSE DIE FORGED MAIN BODY OF PRIMARY SYSTEM VALVES", NDE, 10. Dezember 2011 (2011-12-10), XP055167982, Gefunden im Internet: URL:http://www.ndt.net/article/nde-india20 11/pdf/3-32A-4.pdf [gefunden am 2015-02-06]
- Anonymous: "3D-Ultraschall in der Schwangerschaft", Universitäts-frauenklinik Würzburg Universitäts-frauenklinik Würzburg, 1 March 2005 (2005-03-01), pages 1-2, Retrieved from the Internet: URL:https://web.archive.org/web/2009012908 5318/http://frauenklinik.uni-wuerzburg.de/ mutterkindzentrum/3d_ultraschall.htm [retrieved on 2021-06-21]
- Deutsch Volker, Et Al: "Ultraschall-prüfung" In: "Ultraschall-prüfung Grundlagen und industrielle Anwendungen", 1 January 1997 (1997-01-01), Springer pages 1-23,

## Beschreibung

Die vorliegende Erfindung betrifft ein Verfahren zur Messung einer Wandstärke bei Hohlventilen mit hohlem Ventilkopf. Die Erfindung betrifft weiter ein Verfahren zur Herstellung eines Hohlventils mit hohlem Ventilkopf.

An Hohlventile werden aufgrund ihrer filigranen Ausführungsform oftmals hohe Qualitätsanforderungen gestellt, welche auch Stichproben bis hin zu einer 100%-Prüfung umfassen können. Insbesondere die Einhaltung einer vorgegebenen Wandstärke ist bei derartigen Hohlventilen ein wichtiger Qualitätsfaktor. Im einfachsten Fall bei einem nur hohl gebohrten Ventil ist dies die Wandstärke im Schaft und hier insbesondere ein eventuell vorhandener Mittenversatz dieser Bohrung, der sich auf die Wandstärke des Schafts des Hohlventils auswirkt. In diesem Fall kann dies durch Messung der Wandstärke an mindestens zwei oder besser vier oder idealerweise sogar kontinuierlich am Umfang festgestellt werden. Bei gebauten Hohlventilen aus umgeformten und miteinander verschweißten Blechteilen ist die Wandstärkenmessung am Rohteil beziehungsweise am fertig montierten Ventil ebenfalls ein entscheidendes Qualitätsmerkmal, da durch den Umform- und Schweißprozess Abweichungen der Wandstärke entstehen können. Bei Hohlventilen hingegen, bei welchen ein Hohlraum im Ventilkopf mittels elektrochemischem Abtragen (ECM) hergestellt wird, ist ebenfalls die Messung der Wandstärke extrem wichtig, da das elektrochemische Abtragen schlecht einsehbar und damit kontrollierbar ist und darüber hinaus nicht durch eine feste Schneide, wie beispielsweise beim Herstellen eines Hohlraums mit einem Bohrer, definiert wird. Zugleich wird beim elektrochemischen Abtragen eine gekrümmte und unregelmäßige Fläche erzeugt, die zudem noch einen Hinterschnitt bildet. Können dabei eine Wandstärke am Schaft bzw. am Tellerboden noch relativ unkompliziert taktil vermessen werden, ist dies für die Messung der Wandstärke im Bereich der Hohlkehle nur noch schwer möglich. Jedoch erfordert auch bereits das Messen der Wandstärke im Bereich des Schafts eine vergleichsweise lange Messzeit und ein taktiles Anfahren. Zudem kann nur das Rohteil vermessen werden, da das fertig hergestellte Ventil in der Regel keinen Zugang für ein taktiles Anfahren ermöglicht, da es mit einem Kühlmedium gefüllt und verschlossen wurde. Um Messzeit zu sparen und um möglichst einfach die Wandstärken auch im Bereich der Hohlkehle messen zu können, kann eine Ultraschallmessung eingesetzt werden, welche jedoch beigekrümmten Oberflächen und somit nicht konstanten Dicken bzw. gegenläufigen Oberflächen oftmals Schwierigkeiten bereitet.

Aus der DE 10 2007 011 445 B4 ist ein Ultraschallverfahren zur Messung einer Wandstärke eines geschweißten Hohlprofilträgers bekannt, bei welchem der Hohlprofilträger an den Enden mittels Dichtelementen druckdicht verschlossen und mittels Unterdruck bzw. Überdruck beaufschlagt wird. Anschließend wird mit einer in dem Hohlprofilträger verfahrbaren Inspektionseinheit mit einem im Wesentlichen auf den Bereich der Schweißnähte gerichteten Schallsensor ein Geräuschpegel gemessen, der bei einem Riss in den Schweißnähten des Hohlprofilträgers durch ein- oder ausströmende Luft erzeugt wird. Zur Lokalisierung eines anhand eines Strömungsgeräusches ermittelten Risses wird mittels einer Weglängenmesseinheit der jeweils zurückgelegte Verfahrweg des Schallsensors erfasst. Dieses Verfahren ist jedoch ausschließlich für vergleichsweise große Durchmesser von Hohlprofilen anwendbar.

Aus der DE 202 07 684 U1 ist eine Vorrichtung zur Ultraschalldickenmessung innerhalb von Rohren bekannt, die im Innern einer zu kontrollierenden Rohrleitung bewegt wird und die ein Gehäuse mit darin enthaltenen Geräten zur Messung, Verarbeitung und Speicherung von Messdaten besitzt. Diese Geräte umfassen einen Auslösetaktgenerator, einen Ultraschallgeber, einen Verstärker, einen Komperator mit einem Analogeingang, eine digitale Schaltuhr, einen Prozessor sowie einen in Reihe geschalteten digitalen Datenspeicher. Auch diese Vorrichtung wird jedoch wieder im Inneren der zu messenden Rohrleitung bewegt, so dass auch hier der Hohlraum einen gewissen Durchmesser aufweisen muss.

Aus der US 3,382,707 A ist eine Vorrichtung zur Messung eine Wandstärke von rohrförmigen Elementen bekannt, wobei ein Ultraschallsensor für die Wandstärkenmessung derart angeordnet ist, dass der Ultraschall senkrecht in die Oberfläche eingeleitet wird.

Aus der Druckschrift "NON-DESTRUCTIVE EVALUATION OF CLOSE DIE FORGED MAIN BODY OF PRIMARY SYSTEM VALVES", Pk Sharma et al., Proceedings of the national Seminar & Exhibition on Non-Destructive Evaluation, NDE, 10. Dezember 2011, ist ein Verfahren zur Messung einer Wandstärke im Bereich des Ventilschafts bekannt.

Die vorliegende Erfindung beschäftigt sich mit dem Problem, ein Verfahren zur Messung einer Wandstärke bei Hohlventilen mit hohlem Ventilkopf anzugeben, mittels welchem insbesondere auch mittels elektrochemischem Abtragen hergestellte Hohlventile mit hohlem Ventilkopf hinsichtlich ihrer Wandstärke exakt geprüft werden können.

Dieses Problem wird erfindungsgemäß durch den Gegenstand des unabhängigen Anspruchs 1 gelöst. Vorteilhafte Ausführungsformen sind Gegenstand der abhängigen Ansprüche.

Die vorliegende Erfindung beruht auf dem allgemeinen Gedanken, an genau ausgewählten und vordefinierten Stellen eines Hohlventils Ultraschallsensoren in einer bestimmten Art und Weise anzuordnen und darüber eine exakte Ermittlung der Wandstärken zu erhalten. Bei dem erfindungsgemäßen Verfahren zur Messung der Wandstärke bei Hohlventilen mit hohlem Ventilkopf wird eine Wandstärke im Bereich einer Hohlkehle des Hohlventils mit hohlem Ventilkopf mittels zumindest eines Ultraschallsensors ermittelt, wobei in diesem Fall der Ultraschallsensor an einer Stelle der Hohlkehle positioniert wird, an welcher eine Innentangente im Hohlraum des Ventilkopfes parallel zu einer Außentangente an der Hohlkehle verläuft und wobei gleichzeitig der Ultraschallsensor derart zu diesen beiden Tangenten ausgerichtet wird, dass der ausgesandte Ultraschall senkrecht zu diesen Tangenten und senkrecht in die Oberfläche der Hohlkehle eingeleitet wird. Mit dem erfindungsgemäßen Verfahren lassen sich nicht nur auch vergleichsweise dünne Wandstärken von beispielsweise 0,8 bis 3 mm äußerst exakt vermessen, sondern es ist insbesondere auch möglich, die Wandstärke bei einem Hohlventil mit einem mittels elektrochemischem Abtragen hergestellten Hohlraum im Ventilkopf exakt zu erfassen und dadurch die vergleichsweise hohe Qualitätsanforderungen im Bereich der Hohlventile zu erfüllen. Die Stelle, an welcher der Ultraschallsensor im Bereich der Hohlkehle positioniert werden muss, kann bereits vorab von einem Konstrukteur festgelegt werden, so dass eine entsprechende Prüfvorrichtung den Ultraschallsensor bereits definiert auf diese Stelle ansetzt.

Bei einer bevorzugten Weiterbildung wird zusätzlich eine Wandstärke im Bereich eines Schafts mittels zumindest eines Ultraschallsensors ermittelt, wobei in diesem Fall der Ultraschallsensor derart zur Oberfläche am Schaft ausgerichtet wird, dass der ausgesandte Ultraschall senkrecht in die Oberfläche eingeleitet werden kann.

Bei einer vorteilhaften Weiterbildung des erfindungsgemäßen Verfahrens wird der Ultraschallsensor an einem Bereich von 20° < α < 40° relativ zu einer Tellerplanfläche angeordnet. In diesem Winkelbereich liegt üblicherweise diejenige Stelle an der die Tangenten beider gekrümmter Flächen, das heißt der innenliegenden Hohlraumoberfläche und der außenliegenden Hohlkehlenoberfläche parallel zueinander verlaufen. Durch die exakte Definition dieser Stelle und Auswahl dieses Winkelbereichs ist auch eine hohe Wiederhohlgenauigkeit der Messung bzw. Prüfung möglich.

Zweckmäßig erfolgt die Messung in einem Fluid, insbesondere in Öl, einem aufgetragenen Kontaktgel oder in mit einem Korrosionsschutz versehenem Wasser. Der Ultraschallsensor benötigt für die Übertragung der Schallwellen ein geeignetes Medium um den Spalt zwischen Sensorkopf und Ventil überbrücken zu können. Mit einem Kontaktgel kann dies beispielsweise erreicht werden. Zweckmäßiger ist es aber das komplette Hohlventil zumindest im zu vermessenden Bereich in ein Fluid zu tauchen, in das auch der Ultraschallsensor getaucht ist. Dies ist einfach zu gestalten und kosteneffizient, da das Fluid lange zeit verwendet werden kann, wohin gegen ein Kontaktgel nach Verwendung abgewaschen werden muss.

Generell sollte die Oberflächenqualität des Hohlventils sowohl außen im Bereich des Schaftes bzw. im Bereich der Hohlkehle als auch innen im Bereich des Hohlraums als RZ25, insbesondere auch kleiner als RZ12 sein und darüber hinaus wenige Rillen aufweisen, die die Wandstärkenmessung verfälschen würden.

Bei einer weiteren vorteilhaften Ausführungsform des erfindungsgemäßen Verfahrens wird das zu vermessende Hohlventil während der Messung gedreht oder aber es werden gleichzeitig zwei oder vier Ultraschallsensoren auf das zu vermessende Hohlventil gerichtet. Wird lediglich ein einziger Ultraschallsensor verwendet, so können unterschiedliche Messpunkte durch ein einfaches Drehen des Hohlventils um seine Schaftachse angefahren werden. Um die Messzeit insgesamt zu reduzieren, können selbstverständlich auch mehrere in Umfangsrichtung verteilte Ultraschallsensoren vorgesehen werden, die vorzugsweise gleichzeitig eine Wandstärkenmessung durchführen, wodurch insbesondere auch ein Drehen des Hohlventils zwischen zwei Messungen entfallen kann. Dabei ist es selbstverständlich unerheblich in welcher Lage, beispielsweise mit dem Ventilboden nach unten oder nach oben, die Messung durchgeführt wird.

Die vorliegende Erfindung beruht weiter auf dem allgemeinen Gedanken, ein Verfahren zur Herstellung eines Hohlventils mit einem hohlen Ventilkopf anzugeben, bei welchem mittels Bohren und/oder elektrochemischem Abtragen (ECM) ein Hohlraum in das Hohlventil bzw. in das zunächst noch als Vollventil ausgebildete Ventil eingebracht wird. Unmittelbar nach dem Einbringen des Hohlraums wird dann eine Wandstärke des Hohlventils an der Hohlkehle und vorzugsweise am Schaft mittels des zuvor beschriebenen Verfahrens gemessen. Dies bietet den großen Vorteil, die Wandstärkenmessung bereits in einem frühen Fertigungsschritt zu integrieren, so dass ein Hohlventil mit ungenügender Wandstärke bereits frühzeitig, insbesondere vor weiteren teuren Arbeitsschritten (Schleifen/Beschichten) ausgesondert werden kann. Hierdurch kann der Herstellungsprozess insgesamt kostengünstiger gestaltet werden. Zudem ist eine taktile Vermessung aufgrund der beengten Platzverhältnisse und die einzige Zugangsmöglichkeit durch eine enge Schaftbohrung nur mittels einer speziellen und äußerst aufwändigen Messeinrichtung möglich, die zudem für eine Serienmessung wegen einer langen Messdauer kaum geeignet wäre. Des Weiteren ist eine taktile Messung bei einem fertig montierten Ventil mit eingefülltem Kühlmedium und verschlossenem Ventilschaft nicht mehr möglich.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch
- Fig. 1: eine Schnittdarstellung durch ein Hohlventil bei Messung einer Wandstärke im Bereich eines Ventilschafts,
- Fig. 2: eine Schnittdarstellung durch ein Hohlventil in einem mittels elektrochemischen Abtragen hergestellten Hohlraum bei der Wandstärkenbestimmung im Bereich des Hohlraums,
- Fig. 3: eine Vorrichtung zur Durchführung des erfindungsgemäßen Verfahrens,
- Fig. 4: zwei Diagramme zur Visualisierung der Wandstärkenabweichung,
- Fig. 5: die erfindungsgemäße Vorrichtung aus Fig. 3 mit insgesamt vier Ultraschallsensoren.

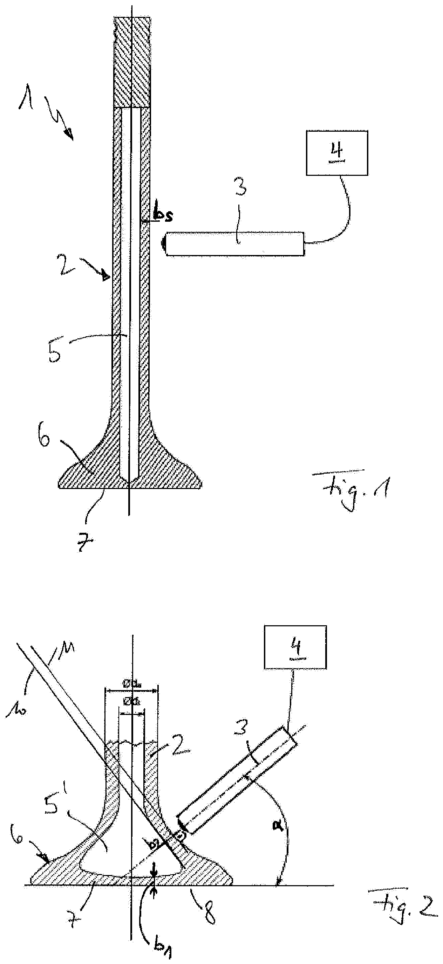

Entsprechend der Fig. 1, wird eine Wandstärke bₛ eines Hohlventils 1 im Bereich eines Ventilschafts 2 mittels zumindest eines Ultraschallsensors 3 ermittelt, wobei der Ultraschallsensor 3 derart zur Oberfläche am Ventilschaft 2 ausgerichtet ist, dass der ausgesandte Ultraschall senkrecht in die Oberfläche, hier also senkrecht zur Achse des Hohlventils 1 eingeleitet wird. Der Ultraschallsensor 3 ist dabei nicht nur zur Aussendung, sondern auch zur Aufnahme eines reflektierten Ultraschallsignals ausgebildet, welches dann mittels einer Auswerteeinheit 4 ausgewertet werden kann. Wie der Darstellung aus Fig. 1 zu entnehmen ist, weist das Hohlventil 1 einen gebohrten Hohlraum 5 auf, der sich nicht nur über den Ventilschaft 2 sondern bis in den Bereich des Ventilkopfes 6 erstreckt.

Im Unterschied dazu besitzt das gemäß der Fig. 2 dargestellte Hohlventil 1 im Bereich seines Ventilkopfes 6 eines mittels elektrochemischen Abtragen (ECM) hergestellten Hohlraum 5', wobei die Wandstärke b₁ oder b₂ eines derartig hergestellten Hohlraums 5' aufgrund des Herstellungsprozesses des Hohlraums 5' deutlich schwieriger zu erfassen ist. Die Wandstärke b₁ liegt dabei im Bereich eines Ventilbodens 7, der durch eine Tellerplanfläche 8 definiert ist. Die Wandstärke b₂ hingegen liegt im Bereich einer Hohlkehle 9. Zur Ermittlung der Wandstärke b₂ wird nun der Ultraschallsensor 3 an einer Stelle der Hohlkehle 9 positioniert, an welcher eine Innentangente 10 im Hohlraum 5' parallel zu einer Außentangente 11 an der Hohlkehle 9 verläuft und wobei der Ultraschallsensor 3 derart zu diesen Tangenten 10, 11 ausgerichtet wird, dass der ausgesandte Ultraschall senkrecht in die Oberfläche und zugleich senkrecht zu den beiden Tangenten 10, 11 in den Ventilkopf 6 des Hohlventils 1 eingeleitet wird. Das senkrechte Einleiten des Ultraschalls ermöglicht eine exakte Wandstärkenbestimmung.

Betrachtet man die Fig. 2 weiter, so kann man erkennen, dass der Ultraschallsensor 3 in einem Bereich von 20° < α < 40° relativ zur Tellerplanfläche 8 angeordnet wird, in diesem Winkelbereich normalerweise diejenige Stelle liegt, an welcher die beiden Tangenten 10, 11 parallel zueinander verlaufen.

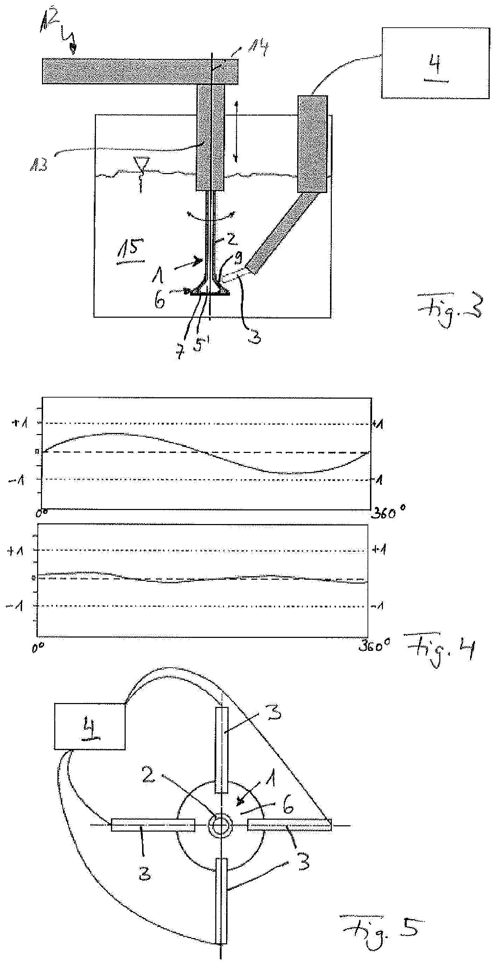

Gemäß der Fig. 3 ist eine Vorrichtung 12 zur Durchführung des Messverfahrens gezeigt, wobei die Vorrichtung 12 einen das zu messende Ventil haltenden Arm 13 aufweist. Dieser Arm 13 ist dabei nicht nur in der Lage, das zu vermessende Hohlventil 1 um eine Ventilachse 14 zu drehen, so dass mehrere Messpunkte bzw. mehrere Wandstärken bₛ, b₂ im Bereich des Ventilschafts 2 bzw. der Hohlkehle 9 erfasst werden können, sondern er ist zudem auch in der Lage, das zu vermessende Hohlventil 1 in ein Fluid 15, beispielsweise in Öl oder in mit einem Korrosionsschutz versehenem Wasser, zu tauchen, so dass die eigentliche Messung der Wandstärke b in dem Fluid 15 erfolgt. Dies ist erheblich einfacher, kostengünstiger und auch besser automatisierbar zu bewerkstelligen als eine Messung mittels Kontaktgel, das erst aufgetragen und nach der Messung wieder entfernt werden muss.

Um einen möglichst hohen Qualitätsanspruch erfüllen zu können, sollte die Prüfung der Wandstärke b₁ bzw. b₂ oder die Wandstärke bₛ des Ventilschafts 2 an mehreren Punkten erfolgen, wobei es prinzipiell zwei unterschiedliche Verfahrensvarianten gibt. Gemäß der in der Fig. 3 dargestellten Vorrichtung 12 wird das zu vermessende Hohlventil 1 während bzw. zwischen zwei Messungen um seine Ventilachse 14 gedreht. Alternativ hierzu ist auch denkbar, dass gleichzeitig zwei oder wie in der Fig. 5 gezeigt ist vier Ultraschallsensoren 3 auf das zu messende Hohlventil 1 gerichtet werden, wodurch insbesondere auch die Taktzeit zur Durchführung der Wandstärkenmessung reduziert werden kann.

In Fig. 4 sind zwei Diagramme dargestellt, die eine Wandstärkenabweichung im Ventilschaft 2 bei einem Schlechtteil (obere Darstellung) und bei einem Gutteil (untere Darstellung) zeigen. Deutlich erkennbar ist dabei, dass die Wandstärkenabweichung beim unten dargestellten Gutteil eng um die Nulllinie verläuft, wogegen sie in der oberen Darstellung beim Schlechtteil vergleichsweise weit streut. Derartige Schlechtteile sind somit vorzugsweise bereits in einem frühen Fertigungsschritt des Hohlventils 1 auszusondern, insbesondere direkt nach dem Herstellen des Hohlraums 5, 5' und vor allem vor weiteren teuren und arbeitsintensiven Fertigungsschritten, wie beispielsweise einem Schleifen oder Beschichten.

Mit dem erfindungsgemäßen Verfahren und der erfindungsgemäßen Vorrichtung 12 ist es somit möglich, eine 100%-Prüfung der hergestellten Hohlventile 1 durchzuführen, wodurch eine hohe Qualität gewährleistet werden kann.

## Patentansprüche

1. Verfahren zur Messung einer Wandstärke (b) bei Hohlventilen (1) mit hohlem Ventilkopf (6), bei dem
- eine Wandstärke (b₂) im Bereich einer Hohlkehle (9), die ein Übergang zwischen einem Ventilschaft (2) und dem Ventilkopf (6) ist, mittels zumindest eines Ultraschallsensors (3) ermittelt wird, wobei der Ultraschallsensor (3) an einer Stelle der Hohlkehle (9) positioniert wird, an welcher eine Innentangente (10) im Hohlraum (5') parallel zu einer Außentangente (11) an der Hohlkehle (9) verläuft und wobei der Ultraschallsensor (3) derart zu den Tangenten (10,11) ausgerichtet wird, dass der ausgesandte Ultraschall senkrecht in die Oberfläche eingeleitet wird.

2. Verfahren nach Anspruch 1,
**dadurch gekennzeichnet,**
**dass** der Ultraschallsensor (3) in einem Bereich von 20° < α < 40° relativ zu einer Tellerplanfläche (8) eines Ventilbodens (7) angeordnet wird.

3. Verfahren nach Anspruch 1 oder 2,
**dadurch gekennzeichnet,**
**dass** die Messung in einem Fluid (15), insbesondere in Öl oder in mit einem Korrosionsschutz versehenem Wasser, erfolgt.

4. Verfahren nach einem der Ansprüche 1 bis 3,
**dadurch gekennzeichnet,**
- **dass** das zu messende Hohlventil (1) während der Messung gedreht wird, oder
- **dass** gleichzeitig zwei oder vier Ultraschallsensoren (3) auf das zu messende Hohlventil (1) gerichtet werden.

5. Verfahren nach einem der Ansprüche 1 bis 4,
**dadurch gekennzeichnet,**
**dass** zumindest ein Hochfrequenz-Ultraschallsensor (3) verwendet wird.

6. Verfahren nach einem der Ansprüche 1 bis 5,
**dadurch gekennzeichnet,**
**dass** die Wandstärke (bₛ,b₂) an zumindest vier Umfangsstellen des Hohlventils (1) gemessen wird.

7. Verfahren nach einem der vorhergehenden Ansprüche,
**dadurch gekennzeichnet,**
**dass** die Wandstärke (bₛ,b₁,b₂) am Rohteil oder am fertigen Hohlventil (1), mit verschlossenem Hohlraum (5,5') gemessen wird.

8. Verfahren nach Anspruch 7,
**dadurch gekennzeichnet,**
**dass** die Wandstärke (b₁) im Bereich eines Ventilbodens (7) mittels zumindest eines Ultraschallsensors (3) ermittelt wird, wobei der Ultraschallsensor (3) derart zur Oberfläche am Ventilboden (7) ausgerichtet wird, dass der ausgesandte Ultraschall senkrecht in die Oberfläche eingeleitet wird.

9. Verfahren nach einem der vorhergehenden Ansprüche,
**dadurch gekennzeichnet**,
eine Wandstärke (bₛ) im Bereich eines Ventilschafts (2) mittels zumindest eines Ultraschallsensors (3) ermittelt wird, wobei der Ultraschallsensor (3) derart zur Oberfläche am Ventilschaft (2) ausgerichtet wird, dass der ausgesandte Ultraschall senkrecht in die Oberfläche eingeleitet wird, wobei gleichzeitig zwei oder vier Ultraschallsensoren (3) auf das zu messende Hohlventil (1) gerichtet werden.

10. Verfahren zur Herstellung eines Hohlventils (1) mit hohlem Ventilkopf (6), bei dem
- mittels Bohren und/oder elektrochemischem Abtragen (ECM) ein Hohlraum (5,5') in das Hohlventil (1) eingebracht wird,
- eine Wandstärke (bₛ,b₁,b₂) des Hohlventils (1) an der Hohlkehle (9) und vorzugsweise am Ventilboden(7) und/oder am Ventilschaft (2) mittels des Verfahrens nach einem der Ansprüche 1 bis 9 gemessen wird.

## Claims

1. Method for measuring a wall thickness (b) in hollow valves (1) with a hollow valve head (6), in which
- a wall thickness (b₂) is determined in the region of a chamfer (9), which is a transition between a valve shaft (2) and the valve head (6), by means of at least one ultrasonic sensor (3), wherein the ultrasonic sensor (3) is positioned at a point of the chamfer (9) at which an inner tangent (10) in the cavity (5') runs parallel to an outer tangent (11) on the chamfer (9) and wherein the ultrasonic sensor (3) is oriented relative to the tangents (10, 11) such that the emitted ultrasound is introduced to the surface in a perpendicular manner.

2. Method according to claim 1,
**characterised in that**
the ultrasonic sensor (3) is arranged in a range of 20° < α < 40° relative to a disc flat surface (8) of a valve base (7).

3. Method according to claim 1 or 2,
**characterised in that**
the measurement is carried out in a fluid (15), in particular in oil or in water provided with an anti-corrosion agent.

4. Method according to any of claims 1 to 3,
**characterised in that**
- the hollow valve (1) to be measured is rotated during the measurement
or
- two or four ultrasonic sensors (3) are directed at the hollow valve (1) to be measured at the same time.

5. Method according to any of claims 1 to 4,
**characterised in that**
at least one high frequency ultrasonic sensor (3) is used.

6. Method according to any of claims 1 to 5,
**characterised in that**
the wall thickness (bₛ, b₂) is measured in at least four circumferential locations of the hollow valve (1).

7. Method according to any of the preceding claims,
**characterised in that**
the wall thickness (bₛ, b₁, b₂) is measured on the blank or on the finished hollow valve (1) with a closed cavity (5, 5').

8. Method according to claim 7,
**characterised in that**
the wall thickness (b₁) is determined in the region of a valve base (7) by means of at least one ultrasonic sensor (3), wherein the ultrasonic sensor (3) is oriented with respect to the surface of the valve base (7) in such a manner that the emitted ultrasound is introduced to the surface in a perpendicular manner.

9. Method according to any of the preceding claims,
**characterised in that**
a wall thickness (bₛ) is determined in the region of a valve shaft (2) by means of at least one ultrasonic sensor (3), wherein the ultrasonic sensor (3) is oriented relative to the surface on the valve shaft (2) such that the emitted ultrasound is introduced to the surface in a perpendicular manner, wherein two or four ultrasonic sensors (3) are directed towards the hollow valve (1) to be measured at the same time.

10. Method for the production of a hollow valve (1) with a hollow valve head (6), in which
- a cavity (5, 5') is introduced into the hollow valve (1) by means of boring and/or electrochemical machining (ECM),
- a wall thickness (bₛ, b₁, b₂) of the hollow valve (1) at the chamfer (9) and preferably additionally at the valve base (7) and/or preferably additionally at the valve shaft (2) is measured by means of the method according to any of claims 1 to 9.

## Revendications

1. Procédé de mesure d'une épaisseur de paroi (b) pour soupapes creuses (1) avec tête de soupape creuse (6), dans lequel
- une épaisseur de paroi (b₂) dans la zone d'une gorge creuse (9), qui est un passage entre une tige de soupape (2) et la tête de soupape (6), est déterminée au moyen d'au moins un capteur à ultrasons (3), dans lequel le capteur à ultrasons (3) est positionné à un emplacement de la gorge creuse (9), au niveau duquel une tangente intérieure (10) dans l'espace creux (5') s'étend parallèlement à une tangente extérieure (11) au niveau de la gorge creuse (9) et dans lequel le capteur à ultrasons (3) est orienté par rapport aux tangentes (10, 11) de sorte que l'ultrason émis est introduit perpendiculairement dans la surface.

2. Procédé selon la revendication 1,
**caractérisé en ce**
**que** le capteur à ultrasons (3) est agencé dans une plage de 20° < α < 40° par rapport à une surface plane de disque (8) d'un fond de soupape (7).

3. Procédé selon la revendication 1 ou 2,
**caractérisé en ce**
**que** la mesure a lieu dans un fluide (15), en particulier dans de l'huile ou dans de l'eau dotée d'une protection contre la corrosion.

4. Procédé selon l'une quelconque des revendications 1 à 3,
**caractérisé en ce**
- **que** la soupape creuse (1) à mesurer est tournée pendant la mesure, ou
- **qu'**en même temps deux ou quatre capteurs à ultrasons (3) sont dirigés sur la soupape creuse (1) à mesurer.

5. Procédé selon l'une quelconque des revendications 1 à 4,
**caractérisé en ce**
**qu'**au moins un capteur à ultrasons haute fréquence (3) est utilisé.

6. Procédé selon l'une quelconque des revendications 1 à 5,
**caractérisé en ce**
**que** l'épaisseur de paroi (bₛ, b₂) est mesurée au niveau d'au moins quatre emplacements périphériques de la soupape creuse (1).

7. Procédé selon l'une quelconque des revendications précédentes,
**caractérisé en ce**
**que** l'épaisseur de paroi (bₛ, b₁, b₂) est mesurée au niveau de la partie tubulaire ou au niveau de la soupape creuse (1) terminée, avec espace creux fermé (5, 5').

8. Procédé selon la revendication 7,
**caractérisé en ce**
**que** l'épaisseur de paroi (b₁) est déterminée dans la zone d'un fond de soupape (7) au moyen d'au moins un capteur à ultrasons (3), dans lequel le capteur à ultrasons (3) est orienté par rapport à la surface au niveau du fond de soupape (7) de sorte que l'ultrason émis est introduit perpendiculairement dans la surface.

9. Procédé selon l'une quelconque des revendications précédentes,
**caractérisé en ce**
**qu'**une épaisseur de paroi (bₛ) est déterminée dans la zone d'une tige de soupape (2) au moyen d'au moins un capteur à ultrasons (3), dans lequel le capteur à ultrasons (3) est orienté par rapport à la surface au niveau de l'arbre de soupape (2) de sorte que l'ultrason émis est introduit perpendiculairement dans la surface, dans lequel en même temps deux ou quatre capteurs à ultrasons (3) sont dirigés sur la soupape creuse (1) à mesurer.

10. Procédé de fabrication d'une soupape creuse (1) avec tête de soupape creuse (6), dans lequel
- un espace creux (5, 5') est ménagé dans la soupape creuse (1) par perçage et/ou enlèvement électrochimique (ECM),
- une épaisseur de paroi (bₛ, b₁, b₂) de la soupape creuse (1) est mesurée au niveau de la gorge creuse (9) et de préférence en plus au niveau du fond de soupape (7) et/ou de préférence en plus au niveau de la tige de soupape (2) au moyen du procédé selon l'une quelconque des revendications 1 à 9.
